# EUROPÄISCHE PATENTSCHRIFT

(11) **EP 1 165 952 B1**
(45) Veröffentlichungstag und Bekanntmachung des Hinweises auf die Patenterteilung: **30.03.2005**
(21) Anmeldenummer: 01913513.6
(22) Anmeldetag: 18.01.2001
(51) Int. Cl.: F02D 13/02, F02D 33/02, B60K 41/06

(54) **VERFAHREN ZUR STEUERUNG EINER BRENNKRAFTMASCHINE MIT VARIABLER VENTILSTEUERUNG**
METHOD FOR CONTROL OF AN INTERNAL COMBUSTION ENGINE WITH VARIABLE VALVE CONTROL
PROCEDE DE COMMANDE D'UN MOTEUR A COMBUSTION INTERNE POURVU D'UNE COMMANDE DE SOUPAPES VARIABLE

(30) Priorität: 29.01.2000 DE 10003944
(43) Veröffentlichungstag der Anmeldung: 02.01.2002
(73) Patentinhaber: Dr.Ing. h.c.F. Porsche Aktiengesellschaft, 70435 Stuttgart (DE); ROBERT BOSCH GMBH, 70049 Stuttgart (DE)
(72) Erfinder: SCHWARZENTHAL, Dietmar, 71254 Ditzingen (DE); HASSDENTEUFEL, Armin, 71706 Unterriexingen (DE)
(86) Internationale Anmeldenummer: PCT/DE2001/000203
(87) Internationale Veröffentlichungsnummer: WO 2001/055572

(56) Entgegenhaltungen:
- EP-A- 0 420 443
- EP-A- 0 562 561
- US-A- 4 535 732
- US-A- 5 679 094

## Beschreibung

Die Erfindung betrifft ein Verfahren zur Steuerung einer Brennkraftmaschine, wobei die Brennkraftmaschine mit einer Vorrichtung zur Änderung einer Ventilsteuerung ausgestattet ist. Änderung der Ventilsteuerung bedeutet in diesem Zusammenhang, daß Größen der Ventilsteuerung wie beispielsweise Ventilhub oder Phasenlage durch an sich bekannte Mittel einstellbar sind.

Bei derartigen Vorrichtungen findet eine Änderung der Ventilsteuerung abhängig von verschiedenen Betriebsparametern der Brennkraftmaschine statt. Ein solcher Betriebsparameter kann beispielsweise die aktuelle Last der Brennkraftmaschine sein. Eine Möglichkeit zur Erfassung einer solchen Last ist die Abfrage der Stellung einer Drosselklappe der Brennkraftmaschine. Insbesondere bei Vorrichtungen zur Änderung der Ventilsteuerung, bei denen die Ventilsteuerung nicht stufenlos, sondern in Stufen verstellt wird, führt eine Änderung der Last der Brennkraftmaschine zu einer Änderung in der Ventilsteuerung, wenn ein für die Umschaltung zwischen den Stufen festgelegter Last-Schwellwert überschritten wird. Ändert sich die Last der Brennkraftmaschine häufig im Bereich des Last-Schwellwertes, so kommt es zu häufigen Schaltvorgängen in der Ventilsteuerung, und somit zu einem erhöhten Verschleiß und unter Umständen auch zu einem unbefriedigenden Betriebsverhalten der Brennkraftmaschine.

Ausgehend von diesem Stand der Technik ist es Aufgabe der Erfindung, ein Verfahren zur Steuerung einer Brennkraftmaschine mit variabler Ventilsteuerung zu schaffen, bei dem eine Änderung der Ventilsteuerung nur dann stattfindet, wenn diese für den Betrieb der Brennkraftmaschine erforderlich ist.

Erfindungsgemäß wird diese Aufgabe mit den Merkmalen des Patentanspruches 1 gelöst. Der Erfindung liegt dabei die Erkenntnis zugrunde, daß Wechsel in der Last der Brennkraftmaschine insbesondere dann stattfinden, wenn es in einem der Brennkraftmaschine nachgeschalteten Getriebe zu einem Schaltvorgang kommt. Es wird daher vorgeschlagen, ein der Brennkraftmaschine nachgeschaltetes Getriebe dahingehend zu überwachen, ob im Getriebe ein Schaltvorgang stattfindet. Wird ein solcher Schaltvorgang erkannt, so wird eine Änderung der Ventilsteuerung unterdrückt. Mit diesem Verfahren wird vorteilhafterweise die Anzahl der Änderungen der Ventilsteuerung deutlich reduziert und somit das Verschleißverhalten der Ventilsteuerung sowie gegebenenfalls das Betriebsverhalten der Brennkraftmaschine verbessert, da nun verhindert ist, daß bei einem Schaltvorgang des Getriebes zusätzlich die Leistungscharakteristik der Brennkraftmaschine durch eine Änderung der Ventilsteuerung beeinflußt wird.

Vorteilhafte Weiterbildungen der Erfindung sind in den Unteransprüchen beschrieben.

So wird zum Erkennen eines Schaltvorganges bei einem Schaltgetriebe vorgeschlagen, eine Kupplung zu überwachen und bei geöffneter Kupplung auf einen Schaltvorgang zu schließen. Eine solche Überwachung kann beispielsweise in sehr einfacher Weise durch Abfragen eines Kupplungsschalters am Kupplungspedal erfolgen. Gerade bei einem Schaltgetriebe ist der Wechsel in der Last der Brennkraftmaschine besonders hoch, da hier für einen Schaltvorgang die Last der Brennkraftmaschine auf Null reduziert wird. Bei einem Automatgetriebe kann ein Schaltvorgang erkannt werden, indem ein Steuergerät des Automatgetriebes ein Signal abgibt, wenn dieses Steuergerät einen Schaltvorgang auslöst. Ein solches Signal kann dann besonders einfach erzeugt und weitergeleitet werden, wenn das Steuergerät des Automatgetriebes mit einem Steuergerät für die Ventilsteuerung über einen Datenbus, beispielsweise einen CAN-Bus, verbunden ist.

Völlig unabhängig von der Bauart des Getriebes kann ein Schaltvorgang erkannt werden, indem ein Raddrehzahlsignal mit einem Motordrehzahlsignal ins Verhältnis gesetzt wird, Ändert sich dieses Verhältnis, so liegt ein Schaltvorgang vor, oder der Kraftfluß zwischen der Brennkraftmaschine und den Rädern des Kraftfahrzeuges ist auf andere Weise unterbrochen. Dieses Verfahren kann sehr einfach umgesetzt werden, da Raddrehzahlsignale bereits als Fahrgeschwindigkeitssignal oder für ein Antiblockier-Bremssystem in allen Fahrzeugen bereits erfaßt werden.

Schließlich kann es vorgesehen sein, nach einem erkannten Schaltvorgang eine Änderung der Ventilsteuerung für einen sich unmittelbar anschließenden, vorgegebenen Zeitraum (d.h. eine Totzeit) zu unterdrücken, um auf diese Weise zu verhindern, daß eine Lastanpassung nach einem Schaltvorgang zu einer Änderung der Ventilsteuerung führt.

Der Erfindung ist nachstehend anhand des in den Figuren dargestellten Ausführungsbeispieles näher beschrieben. Es zeigen:
- Figur 1: eine Skizze eines Antriebsstranges eines Kraftfahrzeuges mit einem Schaltgetriebe
- Figur 2: einen Ausschnitt der Skizze nach Figur 1, jedoch für ein Automatgetriebe,
- Figur 3: ein Flußdiagramm eines erfindungsgemäßen Verfahrens zur Steuerung einer Brennkraftmaschine,
- Figur 4.: ein Verfahren zum Erkennen eines Schaltvorganges für das Verfahren nach Figur 3 und
- Figur 5: ein alternatives Verfahren zum Erkennen eines Schaltvorganges für das Verfahren nach Figur 3.

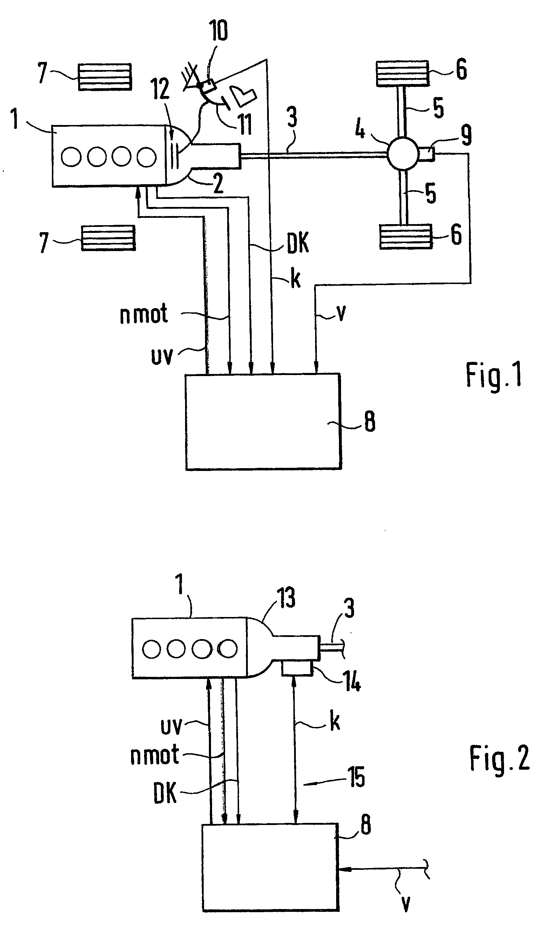

Der in Figur 1 dargestellte Antriebsstrang für ein Kraftfahrzeug besteht aus einer Brennkraftmaschine 1, einem der Brennkraftmaschine 1 nachgeschalteten Schaltgetriebe 2, einer Kardanwelle 3 zur Verbindung des Getriebes 2 mit einem Differential 4 sowie zwei Gelenkwellen 5, die das Differential 4 mit den angetriebenen Rädern 6 verbinden. Die beiden anderen Räder 7 sind nicht angetrieben. Ein Steuergerät 8 erhält als Betriebsgrößen von der Brennkraftmaschine 1 ein Signal DK für die Drosselklappenstellung und damit für die Last der Brennkraftmaschine 1. Zusätzlich erhält das Steuergerät 8 von der Brennkraftmaschine 1 ein Signal nₘₒₜ für die Drehzahl der Brennkraftmaschine 1.

Die Brennkraftmaschine 1 ist mit einer variablen Ventilsteuerung ausgestattet, wie sie beispielsweise aus der DE 40 06 910 A1 (= US 5,120,278) näher bekannt ist. Das Steuergerät 8 steuert diese Vorrichtung zur Änderung der Ventilsteuerung über ein Signal uv in der Weise an, daß bei einem Wert des Signals uv = 0 eine erste Phasenlage in der Ventilsteuerung und bei einem Signal uv = 1 eine zweite Phasenlage in der Ventilsteuerung eingestellt wird.

Schließlich erhält das Steuergerät 8 ein Signal einer Fahrgeschwindigkeit v des Kraftfahrzeuges von einem Signalgeber 9 sowie das Signal k eines Kupplungsschalters 10, der die Stellung eines Kupplungspedales 11 überwacht. Das Kupplungspedal 11 betätigt dabei eine im Getriebe 2 angeordnete Kupplung 12.

Die Anordnung des Signalgebers 9 am Differential 4 bewirkt, daß das Signal v für die Fahrgeschwindigkeit als Mittelwert der Raddrehzahlen der angetriebenen Räder 6 bestimmt wird.

Figur 2 zeigt in einem Ausschnitt der Skizze nach Figur 1 einen Antriebsstrang mit einem Automatgetriebe 13. Automatgetriebe bedeutet in diesem Zusammenhang, daß der Kraftfluß im Getriebe 13 nicht durch den Fahrer und ein Kupplungspedal 11, sondern über ein Steuergerät 14 des Automatgetriebes 13 unterbrochen wird. Die weitere Bauart des Automatgetriebes 13 ist ohne Bedeutung.

Die Signalverbindungen zwischen dem Steuergerät 8 und der Brennkraftmaschine 1 sind gegenüber Figur 1 unverändert. An die Stelle des Signales k vom Kupplungsschalter 10 tritt hier ein Signal k für einen Schaltvorgang, das über einen CAN-Datenbus zwischen dem Steuergerät 8 und der Steuerung 14 des Automatgetriebes 13 ausgetauscht wird. Der weitere Antriebsstrang ist gegenüber der Figur 1 unverändert.

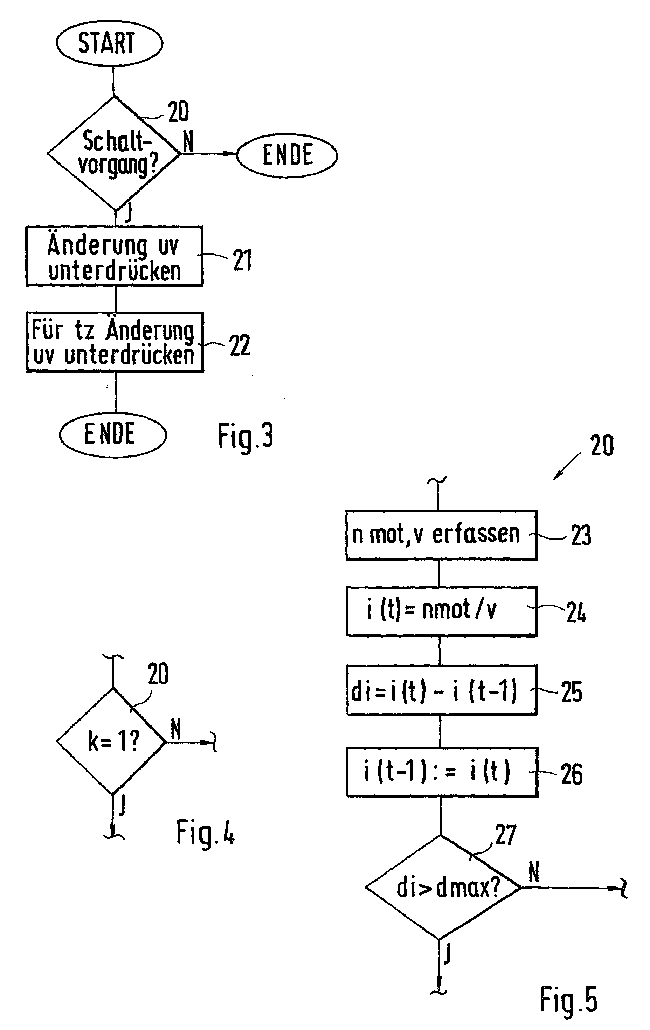

Figur 3 zeigt in einem Flußdiagramm ein im Steuergerät 8 ablaufendes (Unter-) Programm. In einem ersten Schritt 20 wird das Getriebe 2 bzw. das Automatgetriebe 13 dahingehend überwacht, ob im Getriebe ein Schaltvorgang stattfindet. Wird ein solcher Schaltvorgang erkannt, so wird das Programm mit dem nächsten Schritt 21 fortgesetzt, indem für die Dauer des Schaltvorganges eine Änderung des Signals uv unterdrückt wird. Unmittelbar anschließend an Schritt 21 wird in einem Schritt 22 die Änderung des Signals uv für einen zusätzlichen Zeitraum tz weiter unterdrückt. Dieser Zeitraum tz ist hierbei so bemessen, daß Änderungen des Signals DK und damit der Last der Brennkraftmaschine 1, die im Zusammenhang mit dem soeben beendeten Schaltvorgang im Getriebe 2, 13 stehen, in diesem Zeitraum tz zu liegen kommen. Ist dieser Zeitraum tz abgelaufen, oder wurde in Schritt 20 kein Schaltvorgang erkannt, so ist das Programm beendet, und das Steuergerät 8 geht zu anderen, hier nicht dargestellten Programmteilen über.

Figur 4 zeigt eine erste Möglichkeit zum Erkennen eines Schaltvorganges in Schritt 20. Hierzu wird geprüft, ob das Signal k den Wert 1 annimmt. Ist dies der Fall, so wird zu Schritt 21 verzweigt. Anderenfalls wird das Programm nach Figur 3 beendet. Das Signal k nimmt in folgenden Fällen den Wert 1 an:
- Im Falle des Schaltgetriebes 2 nach Figur 1, wenn das Kupplungspedal 11 aus seiner Ruhelage herausbewegt und somit eine Trennung der Kupplung 12 eingeleitet wird oder
- Im Falle eines Automatgetriebes 13 nach Figur 2 solange die Steuerung 14 einen Schaltvorgang im Getriebe 13 durchführt.

Figur 5 zeigt ein alternatives Verfahren zum Erkennen eines Schaltvorganges in Schritt 20. Zunächst werden in einem Schritt 23 die Signale nₘₒₜ für eine Drehzahl der Brennkraftmaschine 1 und v für eine Fahrgeschwindigkeit erfaßt. In einem nachfolgenden Schritt 24 wird ein Verhältnis i (t) der Signale nₘₒₜ und v gebildet. In einem Schritt 25 wird eine Abweichung di des aktuellen Verhältnisses i (t) mit einem zuvor bestimmten Verhältnis i (t-1) berechnet. In einem nachfolgenden Schritt 26 wird das aktuelle Verhältnis i (t) als vorhergehendes Verhältnis i (t-1) gespeichert. In einem Schritt 27 wird geprüft, ob der Betrag der Abweichung di oberhalb eines Maximalwertes dₘₐₓ liegt. Ist dies der Fall, so wird ein Schaltvorgang erkannt und zu Schritt 21 verzweigt. Anderenfalls endet das Programm nach Figur 3.

Der Maximalwert dₘₐₓ für den Betrag der Abweichung di gibt eine zulässige Abweichung an, die noch nicht auf einen Schaltvorgang oder einen anderen die Last der Brennkraftmaschine 1 zusätzlich beeinflussenden Vorgang hinweist. Der Maximalwert dₘₐₓ kann bei einem Schaltgetriebe 2 einen Wert von im wesentlichen Null annehmen. Bei einem Automatgetriebe 13 ist je nach Bauart zu berücksichtigen, daß auch außerhalb eines Schaltvorganges eine Veränderung des Verhältnisses i (t) hervorgerufen werden kann. Dies kann beispielsweise dann der Fall sein, wenn das Automatgetriebe 13 eingangsseitig mit einem hydraulischen Drehmomentwandler versehen ist. Durch die Wahl der Größe des Maximalwertes dₘₐₓ kann in diesem Falle festgelegt werden, ob beispielsweise ein Schlupf in dem genannten Drehmomentwandler zu einer Unterdrückung der Änderung der Ventilsteuerung erfolgen soll oder nicht.

## Patentansprüche

1. Verfahren zur Steuerung einer Brennkraftmaschine, wobei die Brennkraftmaschine (1) mit einer Vorrichtung (8) zur Änderung einer Ventilsteuerung ausgestattet ist,
**gekennzeichnet durch** folgende Schritte:
- Überwachen eines der Brennkraftmaschine nachgeschalteten Getriebes (2,13), ob im Getriebe ein Schaltvorgang stattfindet,
- Unterdrücken einer Änderung der Ventilsteuerung, wenn ein Schaltvorgang erkannt ist.

2. Verfahren nach Anspruch 1, **dadurch gekennzeichnet, daß** zum Erkennen eines Schaltvorganges bei einem Schaltgetriebe (2) eine Kupplung (12) überwacht wird und bei geöffneter Kupplung auf einen Schaltvorgang geschlossen wird.

3. Verfahren nach Anspruch 1, **dadurch gekennzeichnet, daß** zum Erkennen eines Schaltvorganges bei einem Automatgetriebe (13) von einem Steuergerät (14) des Automatgetriebes ein Signal (k) abgegeben wird, wenn das Steuergerät einen Schaltvorgang auslöst.

4. Verfahren nach Anspruch 1, **dadurch gekennzeichnet, daß** zum Erkennen eines Schaltvorganges ein Raddrehzahlsignal (v) mit einem Motordrehzahlsignal (nmot) ins Verhältnis (di) gesetzt wird und bei Änderung des Verhältnisses auf einen Schaltvorgang geschlossen wird.

5. Verfahren nach einem der vorstehenden Ansprüche, **dadurch gekennzeichnet, daß** nach einem erkannten Schaltvorgang eine Änderung der Ventilsteuerung für einen sich unmittelbar anschließenden, vorgegebenen Zeitraum (tz) weiter unterdrückt wird.

## Claims

1. A method of controlling an internal-combustion engine, wherein the internal-combustion engine (1) is provided with a device (8) for varying the valve control,
**characterized by** the following steps:
- monitoring a gearbox (2, 13) arranged downstream of the internal-combustion engine as to whether a gear-shifting procedure is taking place in the gearbox,
- suppressing a change in the valve control if a gear-shifting procedure is detected.

2. A method according to Claim 1, **characterized in that,** in order to detect a gear-shifting procedure in the case of a manual gearbox (2), a clutch (12) is monitored and if the clutch is open a gear-shifting procedure is deduced.

3. A method according to Claim 1, **characterized in that,** in order to detect a gear-shifting procedure in the case of an automatic gearbox (13), a signal (**k**) is emitted by a control device (14) of the automatic gearbox when the control device initiates a gear-shifting procedure.

4. A method according to Claim 1, **characterized in that,** in order to detect a gear-shifting procedure, a wheel-speed signal (**v**) is put into the ratio (**di**) with an engine-speed signal (**nmot**) and if there is a change in the ratio a gear-shifting procedure is deduced.

5. A method according to one of the preceding Claims, **characterized in that** after a gear-shifting procedure is detected a change in the valve control is further suppressed for an immediately following pre-set period of time (**tz**).

## Revendications

1. Procédé de commande d'un moteur à combustion interne, le moteur (1) étant équipé d'un dispositif (8) pour modifier une commande de soupape, **caractérisé par** les étapes suivantes:
- surveiller une transmission (2, 13) montée en aval du moteur pour constater si dans la transmission a lieu un changement de vitesse,
- interdire une modification de la commande de soupape lorsqu'un changement de vitesse est reconnu.

2. Procédé selon la revendication 1, **caractérisé en ce que** pour reconnaître un changement de vitesse dans une transmission à changement de vitesse (2), on surveille un embrayage (12) et dans le cas où l'embrayage est ouvert, on conclut à un changement de vitesse.

3. Procédé selon la revendication 1, **caractérisé en ce que** pour reconnaître un changement de vitesse dans le cas d'une transmission automatique (13), un appareil de commande (14) de la transmission automatique délivre un signal (k) lorsque l'appareil de commande déclenche un changement de vitesse.

4. Procédé selon la revendication 1, **caractérisé en ce que** pour reconnaître un changement de vitesse, un signal de vitesse de rotation de roue (v) est mis en rapport (di) avec un signal de vitesse de rotation du moteur (nmot), et en cas de changement de rapport, on conclut à un changement de vitesse.

5. Procédé selon l'une des revendications précédentes, **caractérisé en ce qu'**après reconnaissance d'un changement de vitesse, on continue de supprimer un changement de la commande de soupape pendant une durée (tz) prédéfinie, immédiatement suivante.
